# EUROPEAN PATENT APPLICATION

(11) **EP 4 744 948 A1**
(43) Date of publication of application: **20.05.2026**
(21) Application number: 25215294.7
(22) Date of filing: 12.11.2025
(51) Int. Cl.: B60L 53/16, B60L 53/302, H01R 13/52

(54) **CONNECTOR**

(30) Priority: 13.11.2024 JP 2024198370
(71) Applicant: Yazaki Corporation, Tokyo 108-0075 (JP)
(72) Inventor: Shiraishi, Tatsuya, Kakegawa-shi, Shizuoka, 437-1421 (JP); Yamaguchi, Yasuhiro, Kakegawa-shi, Shizuoka, 437-1421 (JP)
(74) Representative: Grünecker Patent- und Rechtsanwälte PartG mbB

(57) **Abstract**

A charging inlet includes a terminal member in which an electric wire connection portion is electrically connected to a core wire exposed from a coating of an electric wire end, a connector housing that holds the terminal member in a terminal holding portion, a refrigerant accommodating portion that communicates with the terminal holding portion, a refrigerant that circulates to the refrigerant accommodating portion from outside, and a waterproof member that covers the electric wire end to which the electric wire connection portion is connected in order to prevent the refrigerant from entering the coating.

## Description

### TECHNICAL FIELD

The present invention relates to a connector.

### BACKGROUND ART

A connector (charging inlet) provided in a vehicle such as an electric automatic vehicle or a plug-in hybrid automatic vehicle has been used in the related art to supply (charge) electric power from outside of the vehicle to a battery mounted in the vehicle.

In such a connector, a large current is required in order to increase a capacity of a mounted power storage device, shorten a charging time, and the like. However, when the current is increased, temperature rise of the connector increases due to heat generated in a terminal connection portion of the connector by energization. Therefore, in a connector having a terminal connection portion such as a charging inlet, a connector capable of restraining temperature rise during energization has been proposed (for example, see Patent Literatures 1 to 5).

A connector disclosed in Patent Literature 1 includes a vehicle-side terminal (terminal member), a connector housing that holds the vehicle-side terminal, and a heat storage body accommodated in the connector housing. The heat storage body includes a case accommodated in the connector housing and a heat storage material accommodated in the case. Therefore, the heat storage material of the heat storage body absorbs heat generated at the terminal, and thus sudden temperature rise of the terminal or the like can be restrained.

A connector disclosed in Patent Literature 2 includes a terminal (terminal member) and a heat storage body. The terminal includes a holding portion formed integrally with a terminal connection portion and an electric wire connection portion. The heat storage body is held by the holding portion. The heat storage body includes a heat storage material (latent heat storage material) accommodated in the inside (sealed space) of a case held by the holding portion. The heat storage material can absorb heat generated at the terminal. Therefore, sudden temperature rise of the terminal can be restrained.

In a liquid-cooled charging system for a vehicle disclosed in Patent Literature 3, a fluid circuit extends along components (a contact terminal, a housing, and the like) of a charging assembly. Therefore, a refrigerant flows through the fluid circuit, and heat can be dissipated from the components of the charging assembly during charging of the vehicle.

A cooling device for a charging inlet for a vehicle disclosed in Patent Literature 4 includes a power receiving terminal (terminal member), a housing that holds the power receiving terminal, and a charging inlet cooling circuit which is connected to a battery cooling circuit and to which a refrigerant is supplied. A flow path for the refrigerant supplied from the charging inlet cooling circuit is formed in the housing. Therefore, during charging, the refrigerant flows through the flow path in the housing that holds the power receiving terminal, and the power receiving terminal held by the housing can be cooled.

A connector disclosed in Patent Literature 5 includes, inside a terminal (terminal member), a refrigerant flow path through which a refrigerant flows. Therefore, during charging, the refrigerant flows through the refrigerant flow path in the terminal, and the terminal can be cooled.

### CITATION LIST

### PATENT LITERATURE

Patent Literature 1: JP2020-113448A
Patent Literature 2: JP2020-187920A
Patent Literature 3: JP2021-19499A
Patent Literature 4: JP2022-25813A
Patent Literature 5: JP2022-7469A

### SUMMARY OF INVENTION

However, in the connector disclosed in Patent Literatures 1 and 2, since the heat storage material stores heat, temperature rise of a heat generating portion becomes gentle and the temperature can be restrained, but when a large current flows, a temperature requirement cannot be satisfied only by heat storage.

In the cooling method disclosed in Patent Literature 4, the sudden temperature rise during energization can be restrained by circulating the refrigerant in the flow path, but since the heat of the terminal is cooled via the housing, a thermal resistance is large, and it is difficult to satisfy a higher temperature requirement.

In the connector disclosed in Patent Literatures 3 and 5, the refrigerant flow path through which the refrigerant flows is formed in the terminal, and an electric wire conductor of a cable and a cooling tube must be connected to the terminal, which complicates a structure of the terminal. Therefore, a problem exists that a manufacturing cost of the connector increases.

The present invention has been made in view of the above circumstances, and an object thereof is to provide a connector that can restrain temperature rise of a terminal member during energization and is easily manufactured.

In order to achieve the above object, a connector according to the present invention is characterized as follows. The connector includes a terminal member in which an electric wire connection portion is electrically connected to a core wire exposed from a coating of an electric wire end; a connector housing that holds the terminal member in a terminal holding portion; a refrigerant accommodating portion that communicates with the terminal holding portion; a refrigerant that circulates to the refrigerant accommodating portion from outside; and a waterproof member that covers the electric wire end to which the electric wire connection portion is connected in order to prevent the refrigerant from entering the coating.

According to the present invention, it is possible to provide a connector that can restrain temperature rise of a terminal member during energization and is easily manufactured.

The present invention has been briefly described above. Details of the present invention can be clarified by reading modes (hereinafter, referred to as "embodiments") for carrying out the invention to be described below with reference to the attached drawings.

### BRIEF DESCRIPTION OF DRAWINGS

FIG. 1 is an overall perspective view of a connector according to an embodiment of the present invention.
FIG. 2 is a sectional view taken along a line II-II in FIG. 1.
FIG. 3 is an exploded perspective view of the connector illustrated in FIG. 1.
FIG. 4 is a perspective view illustrating a connection portion between a terminal and an electric wire illustrated in FIG. 3.
FIG. 5 is a rear perspective view of the connector immediately before a cover is attached to a connector housing.
FIG. 6 is a sectional view taken along a line VI-VI in FIG. 2.

### DESCRIPTION OF EMBODIMENTS

A specific embodiment of the present invention will be described below with reference to the drawings.

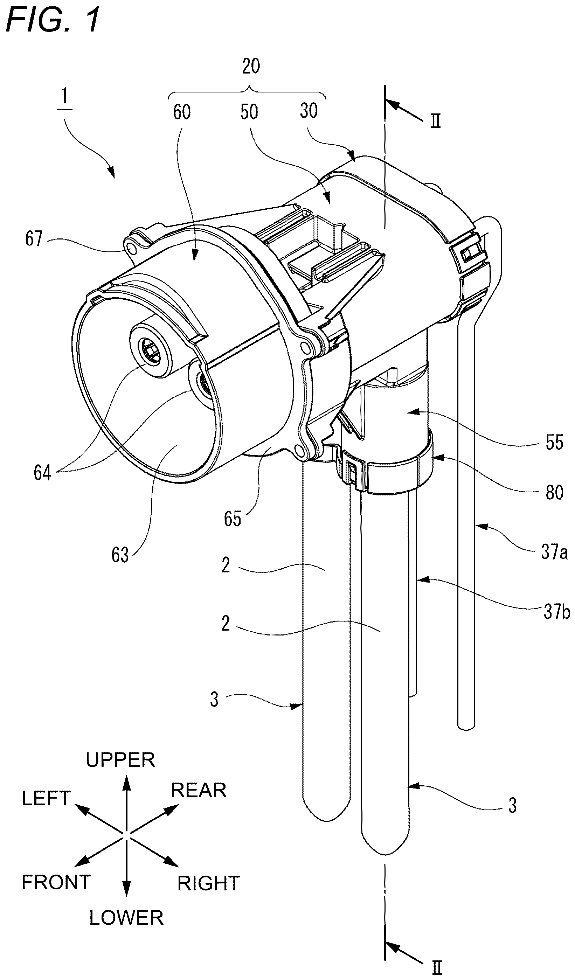

A charging inlet 1, which is a connector according to an embodiment of the present invention, is provided in a vehicle such as a plug-in hybrid automatic vehicle or an electric automatic vehicle, and is connected to an electric wire extending from a battery mounted in the vehicle. By fitting a counterpart connector (so-called charging gun) into a recessed fitting portion 63 (see FIG. 1 and the like) of the charging inlet 1, electric power is supplied to the battery from outside of the vehicle, and the battery is charged.

Hereinafter, for convenience of description, as illustrated in FIG. 1, a "front-rear direction", a "left-right direction", and an "upper-lower direction" are defined. The "front-rear direction", the "left-right direction", and the "upper-lower direction" are orthogonal to one another. The front-rear direction corresponds to a fitting direction of the charging inlet 1 and the counterpart connector (not illustrated). A front side in the fitting direction (a side closer to the counterpart connector) as viewed from the charging inlet 1 is referred to as a "front side", and a release side in the fitting direction (a side away from the counterpart connector) as viewed from the charging inlet 1 is referred to as a "rear side".

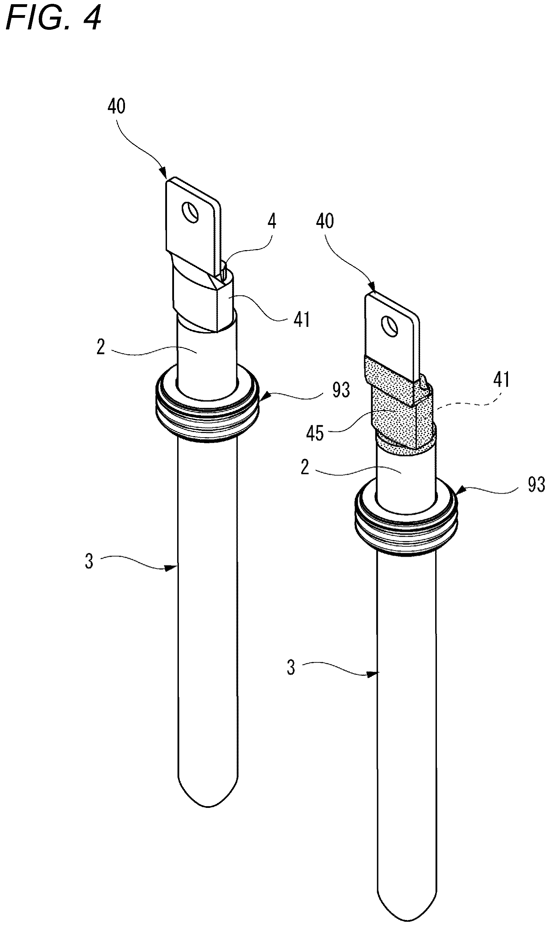

As illustrated in FIGS. 1 to 3, the charging inlet 1 includes a pair of terminal members 70 to each of which one end portion of corresponding one of a pair of electric wires 3 is electrically connected, and a connector housing 20 that accommodates the pair of terminal members 70. The other end portion of each of the pair of electric wires 3 is connected to a battery (not illustrated). Each of the electric wires 3 includes a core wire 4 and a coating 2 made of an insulating resin and covering the core wire 4 (see FIG. 4). Hereinafter, components constituting the charging inlet 1 will be described in order.

First, the connector housing 20 will be described.

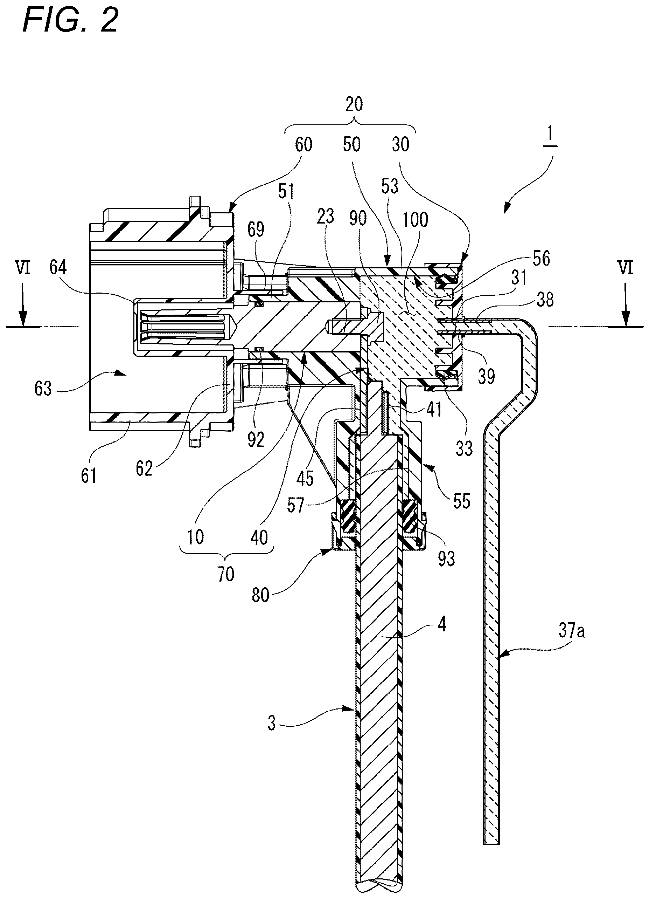

In this example, as illustrated in FIGS. 1, 2, and the like, the connector housing 20 includes a holder 50, a housing body 60, and a cover 30. The holder 50 and the housing body 60 are framework components of the connector housing 20, and constitute a part of an outer surface of the connector housing 20. Of course, the connector housing according to the present invention is not limited thereto, and various forms can be adopted based on the gist of the present invention.

The "framework component" of the connector housing 20 refers to a component having sufficient hardness and strength to maintain a shape of the connector housing 20 itself so as to hold a position of the terminal member 70 against an external force applied to the terminal member 70 when the terminal member 70 and a counterpart terminal (not illustrated) are fitted together, for example. In other words, it refers to a component made of a material that is not softened or fragile to such an extent that it is difficult to maintain its shape due to an increase in an operating temperature of the terminal member 70.

Hereinafter, each component constituting the connector housing 20 will be described in order.

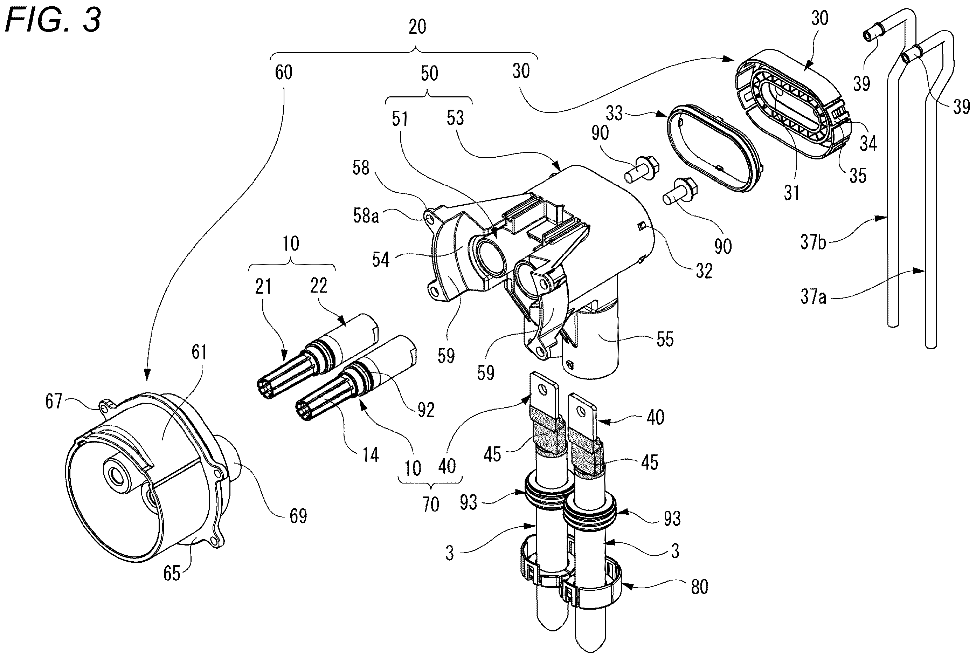

The holder 50 functions to hold the pair of terminal members 70 in a state of being spaced apart from each other in the left-right direction and insulated from each other. As illustrated in FIGS. 2 and 3, the holder 50 is integrally formed with a pair of terminal holding portions 51 arranged in the left-right direction, a refrigerant accommodating portion 53 formed in a rear portion opposite to the terminal holding portions 51, and a pair of electric wire introduction portions 55 arranged in the left-right direction.

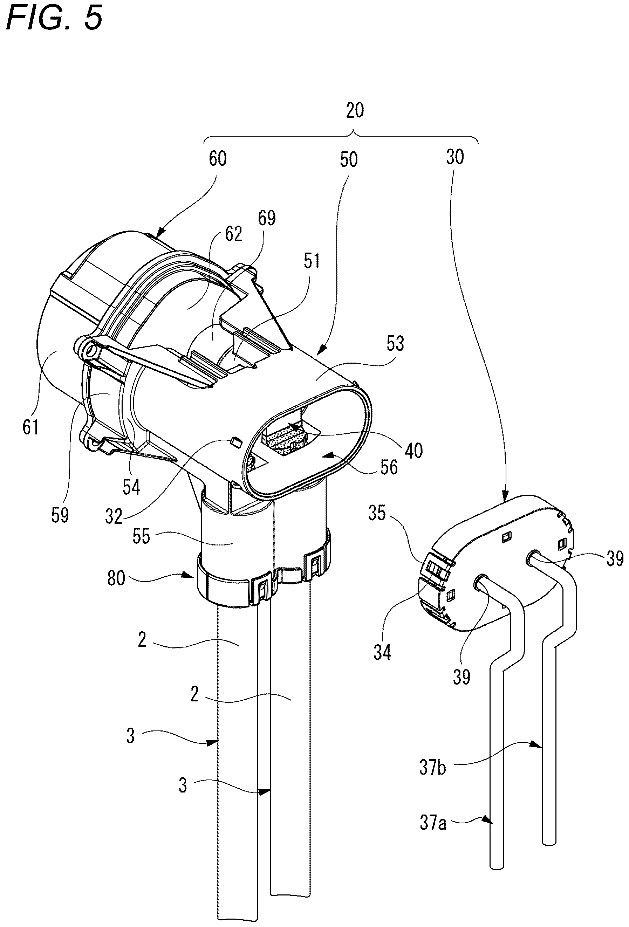

As illustrated in FIG. 5, each of the terminal holding portions 51 of the holder 50 has a cylindrical shape extending in the front-rear direction. A coupling portion 52 couples the pair of terminal holding portions 51. Power terminals 10 of the pair of terminal members 70 are respectively inserted into internal spaces of the pair of terminal holding portions 51 from the front side.

The refrigerant accommodating portion 53 is formed in a concave shape in which the rear portion opposite to the terminal holding portions 51 is opened by an opening portion 56. The opening portion 56 of the refrigerant accommodating portion 53 is sealed by the cover 30 to be described later, thereby constituting an accommodating space in which an insulating refrigerant 100 is liquid-sealed. The refrigerant accommodating portion 53 communicates with the internal space of each terminal holding portion 51.

The electric wire introduction portions 55 extend downward in a direction that intersects with the fitting direction in which the holder 50 is fitted to a counterpart connector. Electric wire through holes 57 communicating with the refrigerant accommodating portion 53 are respectively formed in the electric wire introduction portions 55. LA terminals 40 of the pair of terminal members 70 are respectively inserted into the electric wire through holes 57 from below.

A pair of extending portions 54 extending outward in the left-right direction from both side portions in the left-right direction of a front end portion of the holder 50 and a pair of side wall portions 59 extending forward from extending end portions of the extending portions 54 are integrally provided at the front end portion. The pair of side wall portions 59 have a shape corresponding to a part in a peripheral direction of an outer peripheral shape (cylindrical shape) of a tubular portion 61 of the housing body 60 to be described later as viewed in the front-rear direction, and are mountable to the tubular portion 61 so as to cover an outer peripheral surface of a rear end portion of the tubular portion 61.

As illustrated in FIG. 3, screw insertion portions 58 are provided at a plurality of positions (four positions in the present embodiment) on outer peripheral surfaces (outer side faces in the left-right direction) of the pair of side wall portions 59. Screw through holes 58a penetrating in the front-rear direction are respectively formed in the screw insertion portions 58. Screws (not illustrated) for assembling the housing body 60 are respectively inserted into the screw through holes 58a.

Next, the housing body 60 will be described.

As illustrated in FIGS. 1 to 3, the inner housing body 60 is assembled to the holder 50 from the front side, and functions as the recessed fitting portion 63 of the charging inlet 1. The housing body 60 is a resin molded product and integrally includes the tubular portion 61 extending in the front-rear direction and a rear wall portion 62 closing a rear opening of the tubular portion 61. The tubular portion 61 and the rear wall portion 62 define the recessed fitting portion 63 that is opened forward and recessed rearward.

The rear wall portion 62 is provided with a pair of cylindrical female terminal accommodating portions 64 corresponding to terminal connection portions 21 of the pair of power terminals 10 so as to protrude forward. Each of the female terminal accommodating portions 64 is located in the recessed fitting portion 63 and has an internal space penetrating in the front-rear direction.

The rear wall portion 62 is provided with a pair of cylindrical holder fitting portions 69 corresponding to the pair of female terminal accommodating portions 64 so as to protrude rearward. The holder fitting portion 69 is externally fitted to the front end portion of the terminal holding portion 51 of the holder 50 when assembled to the holder 50 from the front side.

As illustrated in FIG. 3, an annular flange portion 65 protruding radially outward of the tubular portion 61 is provided on an outer peripheral surface of the tubular portion 61 at a position behind a center in the front-rear direction. Screw through holes 67 penetrating in the front-rear direction are formed in the flange portion 65 at a plurality of positions (four positions in the present embodiment) in the peripheral direction corresponding to the plurality of screw through holes 58a of the holder 50. Screws for assembling the housing body 60 are respectively inserted into the screw through holes 67.

Next, the cover 30 will be described.

The cover 30 is formed in an oval plate shape, and is assembled to the refrigerant accommodating portion 53 of the holder 50 from the rear side via an annular seal member 33 (see FIG. 5). Accordingly, the opening portion 56 of the refrigerant accommodating portion 53 of the holder 50 is sealed by the cover 30.

A plurality of locking pieces 35 having locking holes 34 are formed in a peripheral edge of the cover 30. Locking claws 32 formed on the holder 50 respectively enter the locking holes 34 of the locking pieces 35 by assembling the cover 30 to the holder 50. Accordingly, the locking pieces 35 are respectively locked by the locking claws 32, and the cover 30 is held in an assembled state with respect to the holder 50.

One end portion of each of a refrigerant outward path 37a and a refrigerant return path 37b as refrigerant paths communicating with the refrigerant accommodating portion 53 is connected to corresponding one of a pair of openings 31 formed in the cover 30. The other end portion of each of the refrigerant outward path 37a and the refrigerant return path 37b are connected to a cooling device (not illustrated) that cools the refrigerant 100, and the refrigerant 100 filled in the refrigerant accommodating portion 53 of the holder 50 circulates. That is, the refrigerant 100 cooled by the cooling device is supplied to the refrigerant accommodating portion 53 through the refrigerant outward path 37a, and is discharged from the refrigerant accommodating portion 53 to the cooling device through the refrigerant return path 37b. As the refrigerant 100, an insulating oil, an insulating coolant, or the like can be used.

As the cooling device, a cooling device for an in-vehicle battery mounted on a vehicle, a cooling device provided in a charger outside the vehicle, or the like can be used.

A collar 38 is internally fitted and a rubber plug 39 is externally fitted to one end portion of each of the refrigerant outward path 37a and the refrigerant return path 37b connected to the openings 31 of the cover 30. Therefore, although the refrigerant outward path 37a and the refrigerant return path 37b are formed of flexible tube materials, one end portion of each of the refrigerant outward path 37a and the refrigerant return path 37b can be connected to the opening 31 in a liquid-tight manner.

Next, the terminal members 70 according to the present embodiment will be described.

In the present embodiment, the pair of terminal members 70 have the same shape. Each terminal member 70 is integrally configured by the power terminal 10 fitted to the counterpart terminal, the LA terminal 40 crimped to the core wire 4 of the electric wire 3, and a bolt 90 fastening the LA terminal 40 to a rear end portion of the power terminal 10.

The power terminal 10 is made of metal, and as shown in FIG. 3, has the terminal connection portion 21 electrically connected to a counterpart terminal (male terminal) on a front end side and a holding portion 22 held by the holder 50 of the connector housing 20 on a rear end side.

The terminal connection portion 21 is a female terminal portion having a plurality of elastic contact pieces 14. The plurality of elastic contact pieces 14 have a substantially cylindrical shape, and the counterpart terminal (male terminal) is inserted into an interior thereof. The terminal connection portion 21 according to the present embodiment is not limited to the female terminal portion, and may be configured as a male terminal portion.

The holding portion 22 is formed in a short solid columnar shape, and an O-ring 92 is mounted in an annular groove formed on an outer peripheral surface of the holding portion 22. A screw hole 23 into which the bolt 90 is screwed is bored in a rear end surface of the holding portion 22.

FIG. 4 is a perspective view illustrating a connection portion between an electric wire connection portion 41 of the LA terminal 40 and the electric wire 3 illustrated in FIG. 3. In FIG. 4, the right LA terminal 40 shows a state in which a waterproof member 45 that prevents the refrigerant 100 from leaking into the electric wire 3 is provided, and the left LA terminal 40 shows a state before the waterproof member 45 is provided.

As illustrated in FIG. 4, the LA terminal 40 includes the electric wire connection portion 41 to be crimped to the core wire 4 of the electric wire 3. An electric wire end to which the electric wire connection portion 41 of the LA terminal 40 is connected is covered with the waterproof member 45.

As the waterproof member 45, a heat shrinkable tube, potting, resin molding, or the like can be used. The waterproof member 45 covers at least a portion from a distal end portion of the core wire 4, which is crimped to the electric wire connection portion 41 crimped to the core wire 4, to an end portion of the coating 2 where the core wire 4 is exposed, thereby preventing the refrigerant 100 from entering the coating 2 of the electric wire 3.

Next, an assembling procedure of the charging inlet 1 according to the present embodiment will be described.

FIG. 5 is a rear perspective view of the charging inlet 1 immediately before the cover 30 is attached to the connector housing 20.

First, as illustrated in FIG. 2, the power terminal 10 is inserted into the internal space of the terminal holding portion 51 of the connector housing 20 from the front side. The O-ring 92 mounted to the power terminal 10 is pressed into contact with an inner wall surface of the terminal holding portion 51, so that a space between the terminal holding portion 51 and the power terminal 10 is sealed.

Then, the electric wire 3 whose end is connected to the LA terminal 40 is passed through the electric wire introduction portion 55 of the holder 50, and the LA terminal 40 is fastened to the rear end portion of the power terminal 10 by the bolt 90. Therefore, the terminal member 70 whose power terminal 10 is held by the terminal holding portion 51 is accommodated in the connector housing 20.

Further, the rubber plug 93 is mounted on the electric wire 3, and a space between the electric wire end of the electric wire 3 and the electric wire through hole 57 of the electric wire introduction portion 55 is sealed by the rubber plug 93. The rubber plug 93 is retained by a rear holder 80 mounted on a lower end of the electric wire introduction portion 55.

Next, as illustrated in FIG. 5, the cover 30 is assembled to the connector housing 20, and the locking claws 32 of the connector housing 20 are locked to the locking pieces 35 of the cover 30. Then, in the connector housing 20, the opening portion 56 of the refrigerant accommodating portion 53, which is also an assembly work hole for the terminal member 70, is covered by the cover 30 by assembling the cover 30.

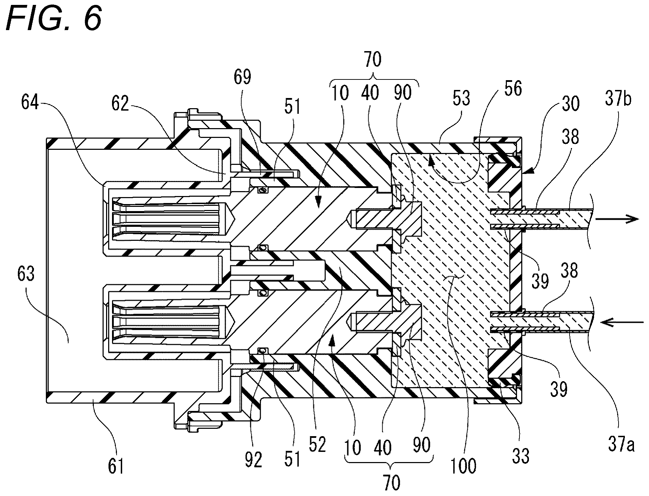

At this time, as illustrated in FIGS. 2 and 6, the opening portion 56 of the refrigerant accommodating portion 53 is sealed by the seal member 33 of the cover 30. The space between the terminal holding portion 51 with which the refrigerant accommodating portion 53 communicates and the power terminal 10 is sealed by the O-ring 92, and the space between the electric wire introduction portion 55 with which the refrigerant accommodating portion 53 communicates and the electric wire 3 is sealed by the rubber plug 93. Further, the electric wire end to which the electric wire connection portion 41 of the LA terminal 40 of the terminal member 70 is connected is covered with the waterproof member 45, thereby preventing the refrigerant 100 from entering the coating 2 of the electric wire 3.

Therefore, the filled refrigerant 100 can be reliably liquid-sealed in the accommodating space of the refrigerant accommodating portion 53. Then, the refrigerant 100 filled in the refrigerant accommodating portion 53 can circulate between the refrigerant accommodating portion 53 and the cooling device through the refrigerant outward path 37a and the refrigerant return path 37b connected to the cover 30.

Next, an operation of the charging inlet 1 according to the present embodiment described above will be described.

When the charging gun is fitted to the charging inlet 1 illustrated in FIG. 1, a charging current is supplied from a charger outside the vehicle to the battery mounted on the vehicle through the charging gun and the charging inlet 1. In particular, when a large charging current is supplied from the charger outside the vehicle to the battery in order to shorten a charging time, heat is likely to be generated at a contact portion between the counterpart terminal of the charging gun and the power terminal 10 of the terminal member 70 of the charging inlet 1.

At this time, in the charging inlet 1 according to the present embodiment, the refrigerant 100 circulates in the accommodating space of the refrigerant accommodating portion 53 communicating with the terminal holding portion 51 of the connector housing 20. That is, the terminal member 70 is immersed in the refrigerant 100 in the refrigerant accommodating portion 53, and the heated terminal member 70 and the refrigerant 100 can be brought into direct contact with each other.

Therefore, according to the charging inlet 1 according to the present embodiment, since the heated terminal member 70 can be brought into direct contact with the refrigerant 100 circulating from the outside, a thermal resistance is reduced, and high cooling performance can be obtained. The refrigerant 100 in the refrigerant accommodating portion 53 always circulates, so that a temperature difference from a heat generating portion is generated, heat is efficiently transferred and discharged, and a temperature rise can be restrained.

Since the refrigerant accommodating portion 53 communicating with the terminal holding portion 51 can be easily formed in the holder 50 of the connector housing 20 and it is not necessary to form a refrigerant flow path in the terminal member 70, an increase in manufacturing cost of the charging inlet 1 can be restrained.

In the charging inlet 1 according to the present embodiment, the terminal member 70 includes the power terminal 10 fitted to the counterpart terminal and the LA terminal 40 fastened to the power terminal 10 by the bolt 90.

Therefore, when the charging inlet 1 is assembled, the terminal member 70 can be easily accommodated in the connector housing 20 by inserting the power terminal 10 into the terminal holding portion 51, passing the electric wire 3 whose electric wire end is connected to the LA terminal 40 through the electric wire introduction portion 55 of the holder 50, and then fastening the LA terminal 40 to the rear end portion of the power terminal 10 by the bolt 90.

In the charging inlet 1 according to the present embodiment, the O-ring 92 mounted on the power terminal 10 held by the terminal holding portion 51 seals the space between the terminal holding portion 51 and the power terminal 10, and the rubber plug 93 mounted on the electric wire end passed through the electric wire introduction portion 55 of the holder 50 of the connector housing 20 seals the space between the electric wire introduction portion 55 and the electric wire end of the electric wire 3.

Therefore, the filled refrigerant 100 can be reliably liquid-sealed in the accommodating space of the refrigerant accommodating portion 53 formed in the holder 50 of the connector housing 20.

The refrigerant outward path 37a and the refrigerant return path 37b connected to the cooling device that cools the refrigerant 100 communicate with the refrigerant accommodating portion 53 of the charging inlet 1 according to the present embodiment.

Therefore, the refrigerant 100 in the refrigerant accommodating portion 53 always circulates through the refrigerant outward path 37a and the refrigerant return path 37b, so that the temperature difference from the heat generating portion is generated, the heat is efficiently transferred and discharged, and the temperature rise can be restrained.

Therefore, it is possible to provide the charging inlet 1 that can restrain the temperature rise of the terminal member 70 during energization and can be easily manufactured.

The present invention is not limited to the embodiment described above and can be appropriately modified, improved, and the like. Materials, shapes, sizes, numbers, arrangement positions, and the like of components in the embodiment described above are freely selected and are not limited as long as the present invention can be implemented.

For example, in the charging inlet 1 described above, since the pair of terminal members 70 corresponding to a positive electrode and a negative electrode are accommodated in the common refrigerant accommodating portion 53, the insulating refrigerant 100 such as the insulating oil or the insulating coolant is used. In contrast, when the pair of terminal members 70 are respectively accommodated in a pair of separate refrigerant accommodating portions divided by a partition wall, or when the single terminal member 70 is accommodated in a single refrigerant accommodating portion, the refrigerant is not required to have insulating properties, and thus a conductive refrigerant such as water or coolant can be used.

In the charging inlet 1 described above, the terminal member 70 is integrally formed by fastening the power terminal 10 and the LA terminal 40 by the bolt 90, but the terminal member according to the present invention is not limited thereto, and it goes without saying that various forms can be adopted based on the gist of the present invention.

Here, features of the embodiment of the connector according to the present invention described above are briefly summarized and listed in the following [1] to [4]. [1] A connector (charging inlet 1) including:
a terminal member (70) in which an electric wire connection portion (41) is configured to be electrically connected to a core wire (4) exposed from a coating (2) of an electric wire end;
a connector housing (20) configured to hold the terminal member (70) in a terminal holding portion (51);
a refrigerant accommodating portion (53) configured to communicate with the terminal holding portion (51);
a refrigerant (100) configured to circulate to the refrigerant accommodating portion (53) from outside; and
a waterproof member (45) configured to cover the electric wire end to which the electric wire connection portion (41) is connected in order to prevent the refrigerant (100) from entering the coating (2).

According to the connector (charging inlet 1) having the configuration in above [1], the terminal member (70) is immersed in the refrigerant (100) in the refrigerant accommodating portion (53), and the heated terminal member (70) and the refrigerant (100) can be brought into direct contact with each other.

Therefore, since the heated terminal member (70) can be brought into direct contact with the refrigerant (100) circulating from the outside, a thermal resistance is reduced, and high cooling performance can be obtained. The refrigerant (100) in the refrigerant accommodating portion (53) always circulates, so that a temperature difference from a heat generating portion is generated, heat is efficiently transferred and discharged, and a temperature rise can be restrained.

Since the refrigerant accommodating portion (53) communicating with the terminal holding portion (51) can be easily formed in the connector housing (20) and it is not necessary to form a refrigerant flow path in the terminal member (70), an increase in manufacturing cost of the connector (charging inlet 1) can be restrained.

[2] The connector (charging inlet 1) according to [1], in which
the terminal member (70) includes a power terminal (10) configured to be fitted to a counterpart terminal, and an LA terminal (40) in which the electric wire connection portion (41) is configured to be crimped to the electric wire end and which is configured to be fastened to the power terminal (10) by a bolt (90).

According to the connector (charging inlet 1) having the configuration in above [2], when the connector (charging inlet 1) is assembled, the terminal member (70) can be easily accommodated in the connector housing (20) by inserting the power terminal (10) into the terminal holding portion (51), passing the electric wire (3) whose LA terminal (40) connected to the electric wire end through the electric wire introduction portion (55) of the connector housing (20), and then fastening the LA terminal (40) to a rear end portion of the power terminal (10) together with the bolt (90).

[3] The connector (charging inlet 1) according to [2], in which
an O-ring (92) mounted on the power terminal (10) held by the terminal holding portion (51) seals a space between the terminal holding portion (51) and the power terminal (10), and
an annular rubber plug (93) mounted on the electric wire end passed through the electric wire introduction portion (55) of the connector housing (20) seals a space between the electric wire introduction portion (55) and the electric wire end.

According to the connector (charging inlet 1) having the configuration in above [3], the filled refrigerant (100) can be reliably liquid-sealed in an accommodating space of the refrigerant accommodating portion (53) formed in the connector housing (20).

[4] The connector (charging inlet 1) according to any one of [1] to [3], in which
a refrigerant outward path (37a) and a refrigerant return path (37b) connected to a cooling device that cools the refrigerant (100) communicate with the refrigerant accommodating portion (53).

According to the connector (charging inlet 1) having the configuration in above [4], the refrigerant (100) in the refrigerant accommodating portion (53) always circulates through the refrigerant outward path (37a) and the refrigerant return path (37b), so that a temperature difference from the heat generating portion is generated, heat is efficiently transferred and discharged, and temperature rise can be restrained.

## Claims

1. A connector (1) comprising:
a terminal member (70) in which an electric wire connection portion (41) is configured to be electrically connected to a core wire (4) exposed from a coating (2) of an electric wire end;
a connector housing (20) configured to hold the terminal member (70) in a terminal holding portion (51);
a refrigerant accommodating portion (53) configured to communicate with the terminal holding portion (51);
a refrigerant (100) configured to circulate to the refrigerant accommodating portion (53) from outside; and
a waterproof member (45) configured to cover the electric wire end to which the electric wire connection portion (41) is connected in order to prevent the refrigerant (100) from entering the coating (2).

2. The connector (1) according to claim 1, wherein
the terminal member (70) includes a power terminal (10) configured to be fitted to a counterpart terminal, and an LA terminal (40) in which the electric wire connection portion (41) is configured to be crimped to the electric wire end and which is configured to be fastened to the power terminal (10) by a bolt (90).

3. The connector (1) according to claim 2, wherein
an O-ring (92) mounted on the power terminal (10) held by the terminal holding portion (51) seals a space between the terminal holding portion (51) and the power terminal (10), and
an annular rubber plug (93) mounted on the electric wire end passed through the electric wire introduction portion (55) of the connector housing (20) seals a space between the electric wire introduction portion (55) and the electric wire end.

4. The connector (1) according to any one of claims 1 to 3, wherein
a refrigerant outward path (37a) and a refrigerant return path (37b) connected to a cooling device that cools the refrigerant (100) communicate with the refrigerant accommodating portion (53).
